# EUROPEAN PATENT APPLICATION

(11) **EP 4 756 635 A1**
(43) Date of publication of application: **10.06.2026**
(21) Application number: 25216371.2
(22) Date of filing: 17.11.2025
(51) Int. Cl.: G06F 16/14, G06F 16/906

(54) **DATA SELECTION TECHNIQUE FOR MACHINE LEARNING MODEL TRAINING**

(30) Priority: 09.12.2024 US 202418973431
(71) Applicant: Cylance Inc., Plano, TX 75024 (US)
(72) Inventor: HENKEL, Steven John, Waterloo, N2K 0A7 (CA); FIENBERG, Aaron Mark Tresch, Waterloo, N2K 0A7 (CA)
(74) Representative: Murgitroyd & Company

(57) **Abstract**

Systems, methods, and software can be used to determine a subset of files from a set of files. In some aspects, a method includes: obtaining a set of vectors associated with the set of files; obtaining at least one value per vector from the set of vectors by performing a dot product between a vector from the set of vectors and a common projection vector; clustering the files or the vectors into clusters of files or vectors based on the at least one value per vector; determining a subset of files by selecting files depending on the clusters of files or vectors.

## Description

### TECHNICAL FIELD

The present disclosure relates to the selection of files in datasets, data lakes and other data storage systems (such as data warehouse, database, etc.) for training machine learning.

### BACKGROUND

In the field of cybersecurity, training a machine learning model requires relevant, varied data that is representative of the various malware files in existence, so that the machine learning model can learn to detect the characteristics/features inherent in this type of file as effectively as possible.

However, databases that concentrate malware files in various forms (binary file, source code file) can be biased in the sense that great disparities in representation can exist. For example, the same file may be represented thousands of times if it has been duplicated and propagated via modifications involving the application of obfuscation techniques.

When file databases are huge (for example, when they comprise hundreds of millions of files or even billions of files), and a machine learning model, such as tree-based classifier or a tree ensemble model, needs to be trained, it is necessary to carry out a selection of files (because training on all the data or on half of these orders of magnitude is not technically feasible; however, neural network architectures may handle more easily huge datasets, and they are prone to underfitting on tabular datasets in contrast with tree embedding models, where the latter performs best when trained on all the data at once, which can be prohibitive on large datasets). However, due to the use of obfuscation techniques, the selection process may overlook certain files that are poorly represented in the database (but which may be very important for the learning process in the training of the machine learning model). In addition, a high degree of duplications can also complicate the evaluation process of a machine learning model, and make it difficult to understand a machine learning model's performance and its generalization capabilities.

It is therefore necessary to propose a selection technique to overcome this problem.

### SUMMARY

Accordingly there is provided a method, a computer program and a system as detailed in the claims that follow.

### DESCRIPTION OF DRAWINGS

FIG. 1 depicts a schematic diagram showing an example system that provides a malware classification technique according to an implementation.
FIG. 2 is a flowchart showing an example operation for selecting files stored in a database, according to an implementation.
FIG. 3 is a flowchart presenting an example method for generating a vector from a file.
FIG. 4 is a flowchart presenting an example method for determining a multiplier value to be used in operations in connection with FIG. 2.
FIG. 5 is a flowchart presenting an example method for training a machine learning model from data with significant disparities in terms of representativeness of the files.
FIG. 6 illustrates a high-level architecture block diagram of a computer according to an implementation.

Like reference numbers and designations in the various drawings indicate like elements.

### DETAILED DESCRIPTION

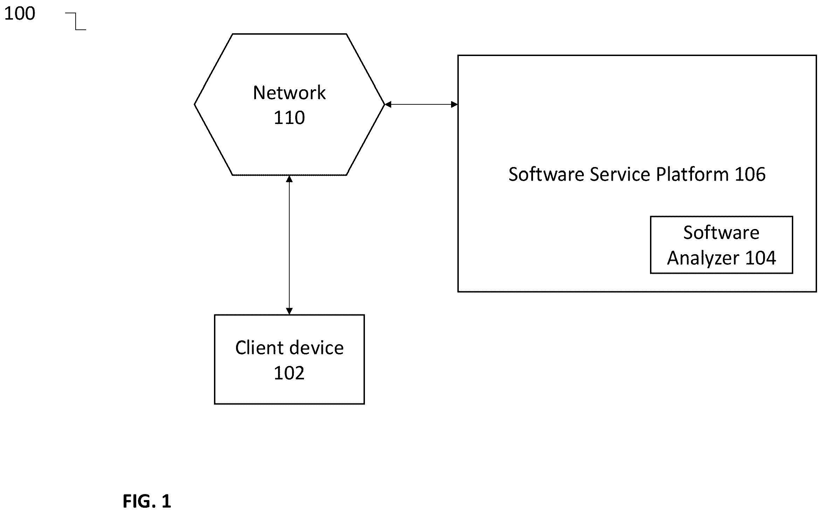

FIG. 1 depicts a schematic diagram showing an example system that provides a malware classification technique according to an implementation. More precisely, the system 100 includes a software service platform 106 that is communicatively coupled with a client device 102 over a network 110. The client device 102 represents an electronic device that provides a file to be analyzed. In some cases, the client device 102 can send a file to the software service platform 106 for a malware detection analysis. In some cases, the software service platform 106 can send the output of the malware detection analysis to the client device 102.

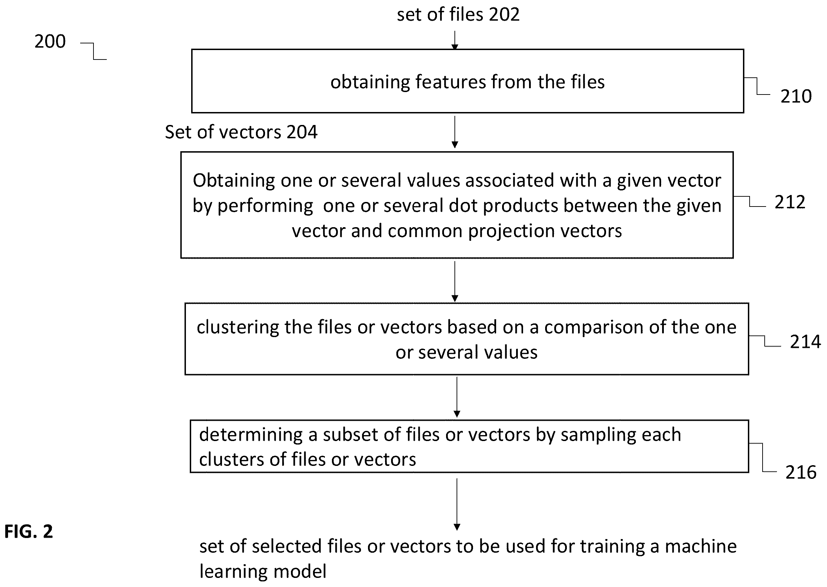

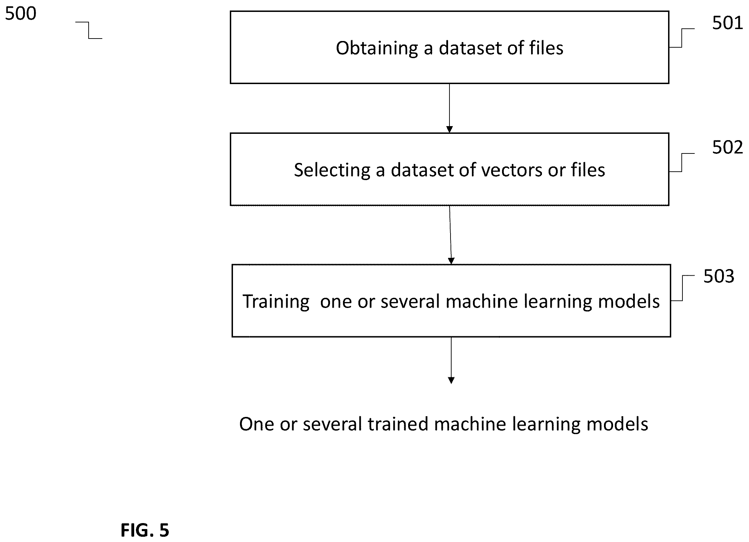

The software service platform 106 represents an application, a set of applications, software, software modules, hardware, or any combination thereof, that detects malware files. The software service platform 106 can be an application server, a service provider, or any other network entity. The software service platform 106 can be implemented using one or more computers, computer servers, or a cloud-computing platform. The software service platform 106 can be used to run trained machine learning models that are used in a malware detection process or malware analysis. In a variant, the software service platform 106 can also perform the training process discussed in FIG. 5 and associated descriptions. The software service platform 106 includes a software analyzer 104. The software analyzer 104 represents an application, a set of applications, software, software modules, hardware, or any combination thereof, that performs data preprocessing on a received file. In some implementations, the software analyzer 104 can generate a file embedding vector of the file, which is used as an input of a trained machine learning model. FIGS. 2-5 and associated descriptions provide additional details of these implementations. In a variant, both the software analyzer 104 and the software service platform 106 are executed in the client device 102 itself. Indeed, more and more client devices, thanks to technological developments, are capable of running trained machine learning models locally. For example, iPhones that can be viewed as client devices are suitable for running machine learning models locally as they provide a core machine learning framework, a dedicated chip component such as the Apple neural engine (ANE) optimized for performing machine learning tasks.

Turning to a general description, the client device 102 may include, without limitation, any of the following: endpoint, computing device, mobile device, mobile electronic device, user device, mobile station, subscriber station, portable electronic device, mobile communications device, wireless modem, wireless terminal, or another electronic device. Examples of an endpoint may include a mobile device, IoT (Internet of Things) device, EoT (Enterprise of Things) device, cellular phone, personal data assistant (PDA), smart phone, laptop, tablet, personal computer (PC), pager, portable computer, portable gaming device, wearable electronic device, health/medical/fitness device, camera, vehicle, or other mobile communications devices having components for communicating voice or data via a wireless communication network. A vehicle can include a motor vehicle (e.g., automobile, car, truck, bus, motorcycle, etc.), aircraft (e.g., airplane, unmanned aerial vehicle, unmanned aircraft system, drone, helicopter, etc.), spacecraft (e.g., spaceplane, space shuttle, space capsule, space station, satellite, etc.), watercraft (e.g., ship, boat, hovercraft, submarine, etc.), railed vehicle (e.g., train, tram, etc.), and other types of vehicles including any combinations of any of the foregoing, whether currently existing or after arising. The wireless communication network may include a wireless link over at least one of a licensed spectrum and an unlicensed spectrum. The term "mobile device" can also refer to any hardware or software component that can terminate a communication session for a user. In addition, the terms "user equipment," "UE," "user equipment device," "user agent," "UA," "user device," and "mobile device" can be used interchangeably herein.

The example system 100 includes the network 110. The network 110 represents an application, set of applications, software, software modules, hardware, or combination thereof, that can be configured to transmit data messages between the entities in the example system 100. The network 110 can include a wireless network, a wireline network, the Internet, or a combination thereof. For example, the network 110 can include one or a plurality of radio access networks (RANs), core networks (CNs), and the Internet. The RANs may comprise one or more radio access technologies. In some implementations, the radio access technologies may be Global System for Mobile communication (GSM), Interim Standard 95 (IS-95), Universal Mobile Telecommunications System (UMTS), CDMA2000 (Code Division Multiple Access), Evolved Universal Mobile Telecommunications System (E-UMTS), Long Term Evaluation (LTE), LTE-Advanced, the fifth generation (5G), or any other radio access technologies. In some instances, the core networks may be evolved packet cores (EPCs).

While elements of FIG. 1 are shown as including various component parts, portions, or modules that implement the various features and functionality, nevertheless, these elements may instead include a number of sub-modules, third-party services, components, libraries, and such, as appropriate. Furthermore, the features and functionality of various components can be combined into fewer components, as appropriate.

FIG. 2 is a flowchart showing an example operation 200 for selecting files stored in a database, according to an implementation. The example operation 200 can be implemented by a software service platform, e.g., the software service platform 106 shown in FIG. 1. The example operation 200 shown in FIG. 2 can be implemented using additional, fewer, or different operations, which can be performed in the order shown or in a different order.

As illustrated in FIG. 2, a set of files 202 is obtained or can be accessed by a software service platform 106. In one implementation, the set of files 202 can comprise only source code files or only binary files or a mixture of the two types of files. Source code files can cover a large number of different file types; they can be either assembly files, or other files comprising human-readable instructions written in a programming or scripting language (such as C, Java, Python, JavaScript, etc.).

In one embodiment of the disclosure, in an obtaining step 210, each file is processed by a file encoder to generate a vector. Hence, for each file, at least one vector is generated. Therefore, a set of vectors 204 is obtained from the use of a file encoder. There are many different file encoders that can be used to generate vectors. These vectors can be of a wide variety of forms and sizes depending of the file encoder used.

According to one implementation, the file encoder used in step 210 can rely on the TLSH (Trend Micro Locality Sensitive Hashing) hashing technique.

Indeed, for a given file (either a binary file or a source code file), a device can determine a TLSH hash. Usually, a TLSH hash is a fixed-size hexadecimal string (usually around 70-80 characters long or 35 bytes) that represents various structural and statistical characteristics of a file. Hence, a TLSH hash encodes the discretized contents of 128 histogram bins in the 64 least significant hexadecimal characters; each hexadecimal character contains the contents of two bins, and each bin can take the value of 0, 1, 2, or 3. These bins are constructed from hashing N-grams. According to this embodiment, a vector can be obtained from a TLSH hash. For example, the hexadecimal strings of the TLSH are converted into decimal integers which are then normalized (to get values between 0 and 1). Each of these values is associated with a component of an obtained vector. In one implementation, the normalization is optional.

In a variant, the device converts a TLSH hash into a binary vector by converting each hexadecimal character of the TLSH hash. Therefore, the device obtains, from a TLSH hash, a binary sequence, and each bit can be considered as a distinct component/dimension of a binary vector. Hence, according to this variant, a binarization of a TLSH hash is done in order to get a binary vector (being a vector whose components are only 1's and 0's).

In a variant, the file encoder used in step 210 can rely on the splitting of the file into chunks, and the use of hash functions such as SHA256, MD5, or other similar functions on these chunks. Then, the device obtains, for a given file, a concatenation of hash values that define a vector. In a variant, a binarization can also be done to obtain a binary vector.

In a variant, the file encoder used in step 210 can rely on a selection process that selects specific features from a file (such as an entropy value (for binary files), a frequency of instructions or statistics related to the content of the file, etc.). Then a hash function can be applied on these selected features to get a hash value associated with the file, and a vector can be derived from such hash value.

In a variant, the file encoder used in step 210 can rely on the use of a trained machine learning model such as CodeBERT or GPT for Code if the file is a source code file. Then, the output of the trained machine learning model is the vector associated with the file. The vector can be a dense vector that can be represented as a fixed-size array of real numbers (floating-point values), with a dimension that depends on the model configuration. For example, the dense vector can have a dimension equal to 768 or 1024.

In another variant, the file encoder used in step 210 can rely on the use of a spectral or signal processing techniques (such as the use of Fourier transforms or wavelets). Then, the output (such as coefficients) is converted into a vector.

In a variant, the file encoder used in step 210 can rely on the use of N-gram encoding. The file is split into a sequence of N-bytes (if the file is a binary file) or into a sequence of N-tokens (if the file is a source code file), and each of the group of N-bytes/group of N-tokens can be hashed and concatenated in order to obtain a vector associated with the file.

In a variant, the file encoder used in step 210 can rely on the one-hot encoding technique. More precisely, a source file can be tokenized (i.e. the device breaks the code of the source file into meaningful units or tokens such as keywords, operators, identifiers of variables, functions, special characters, literals (numbers, strings)). Then the device performs a one-hot encoding of the tokens. The concatenation of the encoded tokens can be viewed as a binary vector.

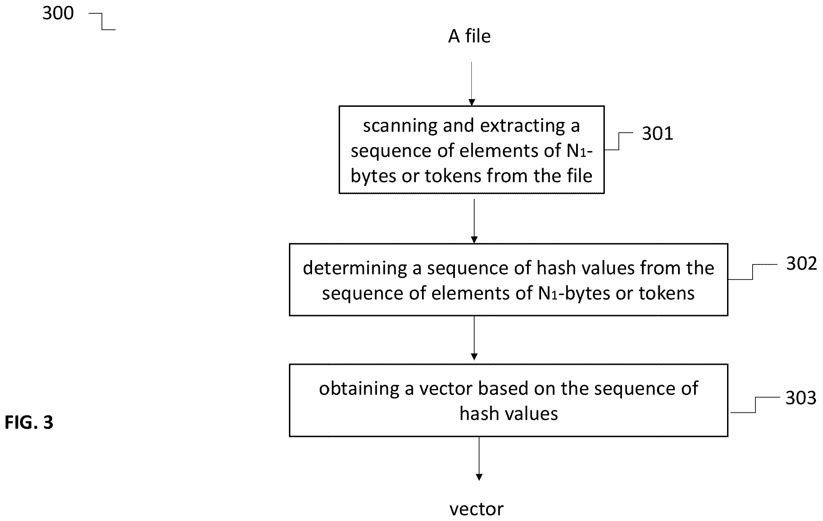

In one implementation, the file encoder used in step 210 can rely on the computer implemented method based on the operations described in FIG. 3. In a variant, the obtained vector is then binarized into a binary vector.

Whatever the nature of the data obtained by a file encoder, it is possible, using conversion and/or normalization processes, to obtain vectors comprising a plurality of coordinates/components.

Hence, at the end of step 210, one or several sets of vectors or binary vectors are obtained. The important thing is to have a homogeneous set of vectors or binary vectors in the sense that the vectors or the binary vectors from a set of vectors or binary vectors have been obtained by the same file encoder. In the following the term of vector or binary vector can be substituted/interchanged depending on the context.

The set of vectors 204 is going to be used in order to classify the files into clusters of near duplicates files. For reminders, near-duplicate files are files that are almost identical to each other but have slight variations. These variations might be due to minor edits, different file formats, or variations in metadata, headers, or compression levels.

In a step 212, the device can obtain one or several values per vector from the set of vectors by performing a dot product between a vector from the set of vectors and a common projection vector. The number of values per vector is related to the number of different common projection vectors used. If only one common projection vector for the set of vectors is used, then there is only one value per vector. If two common projection vectors for the set of vectors are used, then there are two values per vector, and so on.

In one embodiment, in the step 212, a common projection vector is selected by a device to be used in connection with a given set of vectors 204.

The common projection vector has the same size as the vectors from the set of vectors 204.

In one embodiment of the disclosure, the common projection vector comprises components or coordinates with values equal to either -1 or +1 (i.e. it can be viewed as a list or sequence of -1 and +1). In one implementation, the repartition of the distribution of the -1 and +1 can be configured or tuned by the device. For example, the number of +1 and the number of -1 are similar or close to each other. In another example, a bias between these numbers can be used.

In one embodiment of the disclosure, the common projection vector comprises components or coordinates with values equal to either-1 ± Noise_1 or +1 ± Noise_2, wherein Noise_1 and Noise_2 are random real values smaller than 1. For example, Noise_1 and Noise_2 can be generated by a random generator, the random generator being configured to output values that follows selected probability distribution functions (such as a Gaussian distribution). Here again, the repartition of the distribution of the -1 and +1 that are modified later by the use of Noise_1 and Noise_2 can be configured or tuned by the device. By adding a small amount of noise, each feature (i.e. each component of a vector) remains almost equally important, while also reducing collisions between values resulting from the dot product operations.

Once the device has executed the step 212, one or more values are associated with the vectors of the set of vectors.

In one embodiment, the device is going to use these values in order to determine clusters of files (from clusters of the associated vectors).

Indeed, according to one embodiment of the disclosure, in a step 214, a clustering of the vectors (and therefore the corresponding files) is performed based on a multiplying and rounding approach of the one or more values that are associated with the vectors as explained in the following. In the case that a vector/file is associated with two values in a set, a first clustering is performed by a device based on the first value of the files, and a second clustering is performed by the device based on the second value of the files. In general terms, the number of execution of clustering steps is a function of the number of values (resulting from step 212) associated with a file/ vector.

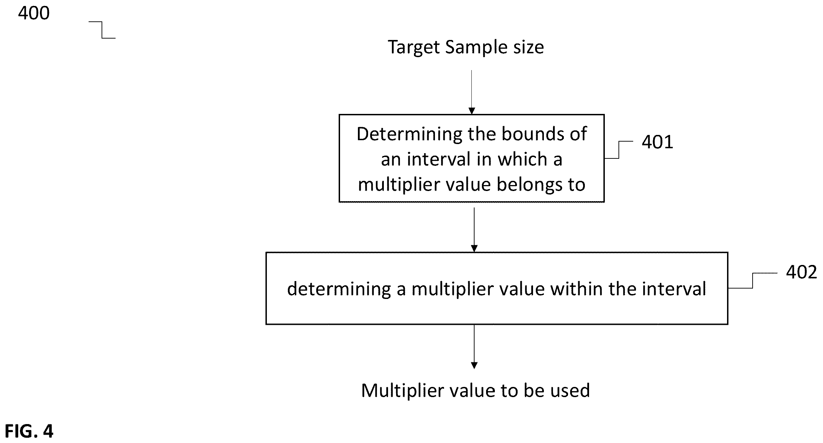

The device performs, in step 214, a multiplication operation between a value associated with a file and a multiplier value (whose determination/selection is detailed in connection with the FIG. 4; there is one multiplier value associated with a common projection vector, therefore the selection process of FIG. 4 must be done several times based on the number of common projection vectors that have been used). Then, in one implementation, the device rounds the result of the multiplication to the nearest integer. Therefore, a file is going to be associated with an integer (in the case that there is only one value associated with the file). These integers will be referred to as "group/cluster identifiers". Indeed, the files that are associated with a same integer are considered as belonging to a same group/cluster. The multiplier value is an important parameter whose value impacts the number of clusters (and also incidentally the number of files within a cluster/group). In one embodiment of the disclosure, a user can provide an expected number of clusters. Based on the expected number provided by a user, the device can determine a suitable/adapted/appropriate multiplier value as explained in connection with FIG. 4. In a variant, the multiplier value associated with a common projection vector is obtained empirically, by testing values and analyzing the impact on the number of clusters. Indeed, as the higher the value of the multiplier, the more distinct clusters there are, a test approach can be used to select a suitable multiplier value.

In a variant, in a step 214, a clustering of the vectors (and therefore the corresponding files) is performed based on a similarity measure between the values outputted by the step 212. For example, based on a comparison of distance measures between the values outputted by the step 212, it is possible to determine clusters. The device can perform the comparison based on the use of comparison thresholds, and/or by using different distance metrics (such as a Euclidean distance, a Manhattan distance, a Minkowski distance, a Chebyshev distance, a Cosine distance, etc.).

Once the clustering step 214 has been done/executed, the vectors (and therefore the corresponding files associated with these vectors) are gathered into clusters.

Then, in a step 216, for each cluster, one or more files/ vectors are selected in order to generate a set of data to be used in the process of training a machine learning model (such as a malware identification machine learning model or a malware classification machine learning model).

In one embodiment of the disclosure, the step 216 comprises a selection based on the mean of the values (resulting from the step 212) in that cluster/group. The selected files/ vectors from a cluster can be the ones that have values close to a mean value of a cluster. Other measures of central tendency could be used here, such as a median.

In a variant, in the case that a vector/file is associated with N values in a set (N being an integer greater than two), and that N-clusterings have been done by a device, a file/ vector can be associated with a sequence of integers or a vector of integers (each integer being the result of the rounding in the corresponding clustering step). In a sense, the device obtains for each file/ vector, an N-dimensional vector of integers. Then, the step 216 comprises a selection of files/ vectors based on the processing of these N-dimensional vectors. In a variant, the number of selected files/ vectors can be limited to a maximal value.

In another embodiment, the selection of the representative files/ vectors (referred to as elements in the following), for each clusters, is done by manipulating the files/ vectors directly instead of their associated values. For example, these elements are selected based on their distance to the centroid of the cluster they belong to. For example, a list of N elements (the N elements closest to the centroid of the cluster, where N is an integer greater or equal to one) can be selected. In a variant, these elements are selected randomly within a given cluster; the number of selected elements can be from one to ten per cluster. Alternatively, the number of selected elements can be related to the size of the cluster; for example, given a cluster with Nb elements, the device selects up to ceil(log(Nb)) elements in this cluster. Other functions can be used such as a root function, or other logarithm functions with different bases. In a variant, these elements are selected based on their distance to the medoid of the cluster they belong to. In a variant, the selection is based on the density of elements in a cluster. For example, more elements from denser regions within the cluster can be selected and fewer from sparser regions within the cluster can be selected. In another implementation, the selection of these elements relies on the use of an elliptic envelope of a cluster of vectors. Indeed, the elliptic envelope is typically computed by estimating the mean and covariance of the vectors in a given cluster: The mean determines the center of the ellipse, and a covariance matrix determines the shape, size, and orientation of the envelope, allowing it to capture the cluster's spread in each dimension. Then by assessing the Mahalanobis distance of elements of the cluster from the mean, and by setting a threshold value, outliers elements can be discarded (i.e. the elements that belong to the cluster but are outside the elliptic envelope are discarded). Then, a selection amongst the remaining elements can be done. In another variant, the kurtosis associated with a cluster of vectors can be used. In the event the kurtosis is low (Platykurtic), this means most of the corresponding files are concentrated around a peak, so no further clustering is necessary. If the kurtosis is high (Leptokurtic), this could be a result of the cluster being generally sparse, or it could be that multiple sub clusters are present. As such, Kurtosis could be used as a measure to tell whether a cluster needs to be further subclustered to ensure an optimal selection of points to represent it is taken.

In a variant, before selecting one or more representative elements of a given cluster, a device can determine statistics on the files comprised in this given cluster and/or it can determine a distribution of these files. Depending on the results obtained, the device may choose to split this given cluster into sub-clusters.

In another variant, the step 216 further comprises a selection based on labels associated with the files (in addition to the previously mentioned data associated with the files). For example, a device can set up an expected distribution of labels in the set of selected files/ vectors, and can modify the selection according to this requirement.

In a variant, the method 200 takes as input a set of files that have a same label.

In one embodiment of the disclosure, the clusters obtained from step 214 can be classified based on the number of files comprised in the different clusters. Then, based on an expected number of selected files to get at the output of step 216, it is possible to determine a number of files to select from the clusters (which can be weighted by cluster size) to take representatives from all the clusters. In a variant, only a certain number of clusters are used to get a list of selected files/ vectors (for example by selecting the N' largest clusters by size, N' being an integer greater than two).

In a variant, as soon as a cluster is formed in step 214, the selection of some files from this cluster is done without waiting for the determination of other clusters. In a sense, steps 214 and 216 are merged. A counter of selected files is updated and compared with a given number of selected files to get at the end of the execution of the method of FIG. 2. This given number is a target sample size parameter.

FIG. 3 is a flowchart presenting an example method 300 for generating a vector from a file.

More precisely, for a given file (either a binary file or a source code file) and according to a scanning process described in the following, several elements made up of N₁-bytes (in the case of a binary file) or N₁-tokens (in the case that the file is not a binary file) from the given file are selected, with N₁ being an integer greater or equal to one. There are several ways to carry out this scanning and selecting process 301.

According to one implementation, the scanning and selecting process 301 depends of the structure of the file. Indeed, if it is a binary file, as different binary file types have different formats and structures, the scanning and selecting process 301 can comprise an additional process for detecting the nature of the file in order to classify it as a PE file or an ELF file or another type of files. Then, it enables the order in which the scanning occurs. For example, if the binary file is an ELF file, according to one embodiment of the disclosure, elements made up of N₁-bytes are obtained by scanning the ELF Header from the beginning of the ELF header to the end of the ELF header. If the ELF header size is not a multiple of N₁, at the end of the scanning of the ELF header, zero bytes can be added to get an element of N₁-bytes. In parallel with or following this processing, the scanning of the ELF data and the selection of elements of N₁-bytes from the ELF data is done. In one embodiment, the scanning starts from the beginning of the ELF data until the end of the ELF data. In a variant, the scanning and selection is done based on the different types of sections. For example, in one embodiment, the process starts from the section header table, and then process bytes from the .data section, the .bss section, the .rodata section, the .symtab section, the strtab section, the .rel.data section, the .text section and the .rel.text section in this order. In a variant, other orders of processing of the sections may be considered. In addition, in a variant, some bytes that have no interest can be discarded from the scanning and selecting step. Indeed, it is unlikely that important information about the dangerousness of the file is included in sections such as the .comment section or .note section from the ELF data. These sections respectively contain optional comments, metadata and notes/annotations.

A similar process can be performed on other types of binary files (i.e. having a specific scanning order of bytes depending on the structure of the binary file induced by its type). For example, the components of an apk file can be scanned according to a specific order. This is also the same for source code files that have specific structures.

According to one implementation, the scanning and selecting process 301 is done without considering the structure of the file. In this variant, the file is processed as a whole. For example, starting from the beginning of a binary file, a number N₁ of bytes are selected at the beginning of the process, and then, according to a sliding window of value equal to N₁, other bytes are selected each time by group of N₁ of bytes. This process is repeated until all the bytes in the binary file have been scanned. Once again, if the binary file size is not a multiple of N₁, either zero bytes are added to have a final group of N₁ bytes, or the number of bytes in the final group of bytes is less than N₁ bytes and will be used as it is in subsequent processing. In a variant, the starting point of the scanning process is not the beginning of the binary file but the end of the binary file. This means that the bytes in the binary file are scanned and selected in the opposite direction of the one of the previous embodiment. In other variants, the starting point of the scanning and selection process is defined as a given position in the binary file. In this case, the bytes can be scanned towards the end of the binary file. Once the end of the file is reached, the other unscanned bytes are scanned starting from the beginning of the binary file (this scanning and selecting process can be seen as a cyclic process). In another variant, if the starting point of the scanning and selection process is defined as a given position in the binary file, the bytes can be scanned in the opposite direction compared to the previous embodiment (i.e. towards the beginning of the binary file). Here again, once the beginning of the binary file is reached, the scanning and selection process continues by starting from the end of the binary file. These examples are not exhaustive and one skilled in the art could use other ways of scanning and selecting bytes in the binary file in the spirit of the described examples. The same process can be performed for tokens of a source file (i.e. by replacing the bytes with tokens in the previous description).

In one embodiment of the disclosure, each time that N₁ bytes/tokens are selected, these are supplied as input to a hash function. The output of the hash function is positioned in a vector of data which is the vector associated with the file. Hence, according to this embodiment, obtaining such vector is done on the fly. In one variant, intermediate memory buffers may be used to prepare the data to be hashed by a hash function. Both approaches enable the determination 302 of a sequence of hash values.

Different types of hash functions can be used; for example, a non-cryptographic hash function such as the Pearson hash function or the MurmurHash function can process inputs of N₁ bytes/tokens, as selected previously. The size of the output of the Pearson hash function is typically 8 bits (1 byte). Therefore, the output of the Pearson hash function is just a number between 0 and 255. However, it is possible to generate larger hash values (16-bit, 32-bit, 64-bit, etc.) by running the Pearson algorithm multiple times with different initial conditions.

In addition, the most common versions of MurmurHash are MurmurHash2 and MurmurHash3. They can generate outputs of 32-bit, 64-bit, and even 128-bit sizes.

In another variant, two hash functions can be used to process a same input of N₁ bytes/tokens. According to this embodiment, a truncation of the concatenation of the two hash values can also be performed in order to limit the size of the hash values. The truncation is defined as the output result, and is used to define/generate the sequence of hashes. For example, given an input of N₁ bytes/tokens, a Pearson hash function outputting a single byte as result can be used. Then, a Pearson hash function, with a different permutation table, outputting also a single byte as a result can be used on the same input of N₁ bytes/tokens. Therefore, for a given input of N₁ bytes/tokens, two bytes (i.e. 16 bits) are obtained from the use of two hash functions. However, instead of using the two bytes in a sequence of hashes, a truncation can be performed. Indeed, in one embodiment, the lower 12 bits from the 16 bits are kept. These 12 bits define a hash value. In a variant, another selection function can be used to extract a number of bits amongst the 16 bits. For example, the selection function can take the highest 12 bits from the 16 bits. In a variant, the two most significant bits and the two least significant bits are discarded by the selection function in order to get the 12 remaining bits. The selected bits correspond to the hash value associated with the given input of N₁ bytes/tokens.

In one embodiment, the number N₁ is an integer that belongs to a range from 2 to 15.

In a variant, before executing the scanning and selecting step, a preprocessing step can be performed. Such preprocessing may remove zero bytes comprised in the binary file. Indeed, a zero byte can be a special character that appears after every byte (either due to syntax/structure requirements (for aligning sections or instructions for example) or for integrity purposes). Hence, these zero bytes can be considered in some way as noise, and may prevent the extraction of truly relevant information. In a variant, the preprocessing step may remove other byte values such as a value of 0x90, in hexadecimal format, which corresponds to a NOP ("no operations") instruction in x86, or other values related to debugging purposes.

According to one implementation, several vectors can be generated for a given file. Indeed, in this embodiment, once a first vector has been generated, another one can be generated by reiterating the processing with a value N₂ different of N₁. It should be noted that the generation of these vectors can be done in parallel.

Therefore, in a variant, given a file, it is possible to generate from 2 to 10 vectors per file by using several different values for N₁ and by repeating the described process.

According to one implementation, all these vectors can be concatenated, and processed by a clustering technique 214. In a variant, the clustering technique 214 is applied on each category of vectors.

In another variant, a vector can be obtained as follows: once all the hash values have been obtained or determined, a histogram vector is determined. The histogram vector is a numerical representation of a histogram of the hashes, which is a graphical representation of the distribution of the hashes. Hence, this vector comprises, for each possible hash values defined by a position in the vector, a number that corresponds to the frequency or count of hashes having this value. This vector is obtained in a step 303.

In a variant, several histogram vectors can be obtained for a given file (by repeating the scanning and selection process with different values of N₁ for a given file).

Therefore, the vector obtained from the execution of the method of FIG. 3 can be either a histogram vector as explained previously, or a vector being a concatenation of vectors of hash values as also explained previously. In a variant, it can also be a concatenation of histogram vectors.

According to one embodiment of the disclosure, a normalization process can be executed on the vectors before being used in the clustering step 214. For example, a Min-Max Normalization (Rescaling) can be done.

In some previous examples, the scanning and extraction 301 focuses on the bytes from the binary file. However, in a variant, instead of using bytes, the scanning and extraction step can be done on nibbles (i.e. groups of 4 bits).

In a variant, a trained autoencoder can be used in order to add data to the vector obtained from the method described in FIG. 3. Indeed, in one embodiment of the disclosure, the encoder model of a trained autoencoder is used to get a representation of a given file in a latent space. This latent space representation of the given file, which is a vector, is then combined (via a concatenation for example) with the vector obtained from the method described in FIG. 3. The vector resulting from this combination is then being used in the clustering step 214.

According to one embodiment of the disclosure, FIG. 4 is a flowchart presenting an example method 400 for determining a multiplier value to be used in operations in connection with FIG. 2.

In order to determine a multiplier value, the method 400 takes as input a target sample size parameter, which is an expected number of files to select from a given set of files in FIG.2.

In a step 401, based on the target sample size parameter, target_sample_size, an upper bound and a lower bound of an interval are determined.

Initially, a device obtains an arbitrary value for the multiplier value, and performs the steps 210, 212 and 214. If a set of vectors is already available, the step 210 can be obviously not executed.

More precisely, the device performs, as in step 214, a multiplication operation between a value associated with a file and a multiplier value, where the multiplier value is a random value. This is done for all the files from the set, but with the same multiplier value used for the multiplication operations). In one embodiment the multiplier value is a value between one and 1000.

Hence, by using a random multiplier value, a number of clusters, nb_cluster, can be obtained/determined.

Then, an expected number of clusters, expected_nb_clusters, is determined as follows: target_sample_size + (target_sample_size -nb_cluster). An updated value of the multiplier is determined by the following equation: ceil(multiplier value *( expected_nb_clusters/ nb_cluster)).

Once, the number expected_nb_clusters is greater than the number target_sample_size, the multiplier value is updated as the final multiplier value, and the process stops.

In the case that the number expected_nb_clusters is smaller than the number target_sample_size, the multiplier value is updated, and the process of updating the multiplier is reiterated.

According to one embodiment of the disclosure, the interval to be used in the next step has as an upper bound, the final multiplier value, and as a lower bound the value of the multiplier value before the last update of the multiplier value.

In a variant, it is possible to determine the number of elements within each cluster (by counting the number of elements in each of the nb_cluster clusters), and adapt the multiplier according to a constraint on the number of elements in the obtained clusters (such as the sum of the logarithm of the size of the clusters should be smaller than a specific target number).

Then, in a step 402, the device determines/selects a value of the multiplier in such way that the number target_sample_size and the number expected_nb_clusters are identical or close to each other's. In one implementation, a split of the interval, and a test approach (by dichotomy) can be done to determine the suitable/adapted/appropriate multiplier value. This value can be stored in memory to be used in the method of FIG. 2, even if new files are added to the set of files. In a variant, the multiplier value can be updated when a certain number of new files have been added compared to the time of determination of the multiplier value. In a variant, the update of the multiplier is done over a planned time range.

According to one implementation, FIG. 5 is a flowchart presenting an example method 500 for training a machine learning model to be used as a malware classification model or as a malware identification model (that can rely on either a neural network architecture or on a decision tree).

It is commonly known that machine learning models are trained using a process that involves feeding them large amounts of data and allowing them to learn patterns and relationships within that data. However, as reminded previously, disparities in the repartition of the files in the training data can have significant implications for the performance and reliability of a machine learning model.

In one implementation, a method for training a machine learning model is proposed. In the following, the machine learning model is a malware classification model or a malware identification model, but the operations and processing used in order to train this machine learning model can be applied to other types of machine learning models.

According to one embodiment of the disclosure, a device obtains 501 a dataset of files having numerous different files. In one embodiment of the disclosure, several datasets can be obtained, and each dataset of files can gather files of the same type (i.e. for example a first dataset with only ELF files, a second dataset with only EXE file, a third dataset with only Python scripts, etc.).

The training process comprises a selecting step 502 similar to the process described in FIG. 2. The step 502 enables the obtaining of a dataset of vectors or files from a dataset of files. In a variant, as explained in the description of FIG. 2, the obtained dataset is a set of files, where the files are selected files of different clusters. Hence, from a dataset of files comprising hundreds of millions or billions of files, it is possible to get, according to the selecting process, a dataset of selected files comprising a number of elements reduced by a factor of 10, 100 or 1000 compared to the original dataset of files. In a variant, it is possible to provide as input to the selection process an order of magnitude of the size of the dataset of files to be obtained (that can be used in the method of FIG. 4).

Once the step 502 is done, a data splitting process can be executed in order to divide a given dataset of vectors/files into a training set and a testing set. The training set is used to train the model, while the testing set is used to evaluate its performance.

According to one embodiment of the disclosure, different model can be chosen to be trained. For example, a feedforward neural network (FNN), also called a multi-layer perceptron (MLP), can be used. In a variant, a Convolutional Neural Networks (CNNs) can be chosen to be trained. In another variant, Recurrent Neural Networks (RNNs) or Long Short-Term Memory (LSTM) Networks can be chosen. Moreover, other architectures relying on the use of transformers or hybrid approaches relying on the use of an MLP combined with autoencoders can be chosen. The way in which the parameters and hyperparameters of each model are chosen is not described in the present document. But one skilled in the art would understand that based on the results of the training of these models, modification of these parameters and hyperparameters is done to obtain better results. Indeed, in order to determine these parameters and hyperparameters, comparison of results has to be done. Factors such as the number of layers, the number of neurons per layer, the activation functions, and the optimization algorithm has an important impact on the behavior of a model. This is the purpose of fine tuning which is beyond the scope of the present document.

In another implementation, gradient boosting frameworks such as XGBoost, CatBoost, and LightGBM can be used to train machine learning models. Indeed, XGBoost, CatBoost, and LightGBM can be viewed as implementations of tree ensemble models because they rely on decision trees.

Once a model architecture is chosen, the model training 503 is performed by using the training dataset, the use of a loss function that measures the discrepancy between the model's predictions and the true values, and the use of an optimization algorithm (e.g., gradient descent) to update the parameters (weights) iteratively to minimize the loss function. Indeed, during the model training, the internal parameters (weights and biases) are modified in order to minimize the difference between the predictions of the model and the actual values in the training data.

The model training 503 further comprises an evaluation step that evaluates the trained model on the testing dataset to assess its performance. Based on the results, either model refinement can be done (i.e. such as the adjustment of the hyperparameters of the model) or the training process can stop at this stage if the performance metrics fulfill a stopping criteria.

In one embodiment, once a trained machine learning model is obtained/generated, it can be deployed to the software service platform 106.

The training process and deployment of a trained machine learning model can be reiterated regularly based on parameters of a security policy, the parameters defining for example a time range or frequency at which to carry out the training. In other case, a security alarm can be the event that trigger the launch of a new training of the one or several models.

In a variant, several machine learning models are trained: a model for each type of files. More precisely, in step 501, there is a dataset of files for each type of files. For example, a machine learning model specially trained on a dataset of .EXE files can be obtained according to one embodiment of the disclosure. Similarly, a machine learning model specially trained on a dataset of Apk files can be obtained according to another embodiment of the disclosure.

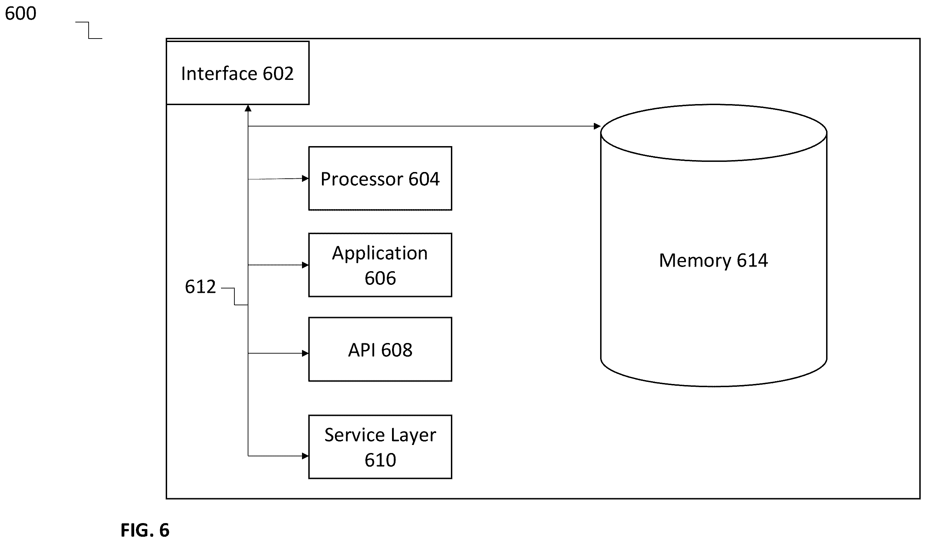

FIG. 6 illustrates a high-level architecture block diagram of a computer 600 according to an implementation. The computer 600 can be implemented as the client device 102, the software service platform, or any combinations thereof. The computer 600 can also be used to implement the operations discussed in FIGS. 1-5. The described illustration is only one possible implementation of the described subject matter and is not intended to limit the disclosure to the single described implementation. Those of ordinary skill in the art will appreciate the fact that the described components can be connected, combined, and/or used in alternative ways consistent with this disclosure.

In some cases, the steps of FIGS. 2-4 can be implemented in an executable computing code, e.g., C/C++ executable codes. In some cases, the computer 600 can include a standalone Linux system that runs batch applications. In some cases, the computer 600 can include mobile or personal computers.

The computer 600 may comprise a computer that includes an input device, such as a keypad, keyboard, touch screen, microphone, speech recognition device, other device that can accept user information, and/or an output device that conveys information associated with the operation of the computer, including digital data, visual and/or audio information, or a GUI.

The computer 600 can serve as a client, network component, a server, a database, or other persistency, and/or any other components. In some implementations, one or more components of the computer 600 may be configured to operate within a cloud-computing-based environment.

At a high level, the computer 600 is an electronic computing device operable to receive, transmit, process, store, or manage data. According to some implementations, the computer 600 can also include or be communicably coupled with an application server, e-mail server, web server, caching server, streaming data server, business intelligence (BI) server, and/or other server.

The computer 600 can collect data of network events or mobile application usage events over network 110 from a web browser or a client application, e.g., an installed plugin. In addition, data can be collected by the computer 600 from internal users (e.g., from a command console or by another appropriate access method), external or third parties, other automated applications, as well as any other appropriate entities, individuals, systems, or computers.

Each of the components of the computer 600 can communicate using a system bus 612. In some implementations, any and/or all the components of the computer 600, both hardware and/or software, may interface with each other and/or the interface 602 over the system bus 612 using an Application Programming Interface (API) 608 and/or a service layer 610. The API 608 may include specifications for routines, data structures, and object classes. The API 608 may be either computer language-independent or -dependent and refer to a complete interface, a single function, or even a set of APIs. The service layer 610 provides software services to the computer 600. The functionality of the computer 600 may be accessible for all service consumers using this service layer. Software services, such as those provided by the service layer 610, provide reusable, defined business functionalities through a defined interface. For example, the interface may be software written in JAVA, C++, or other suitable languages providing data in Extensible Markup Language (XML) format or other suitable format. While illustrated as an integrated component of the computer 600, alternative implementations may illustrate the API 608 and/or the service layer 610 as stand-alone components in relation to other components of the computer 600. Moreover, any or all parts of the API 608 and/or the service layer 610 may be implemented as child or sub-modules of another software module, enterprise application, or hardware module without departing from the scope of this disclosure.

The computer 600 includes an interface 602. Although illustrated as a single interface 602 in FIG. 6, two or more interfaces 602 may be used according to particular needs, desires, or particular implementations of the computer 600. The interface 602 is used by the computer 600 for communicating with other systems in a distributed environment connected to a network (whether illustrated or not). Generally, the interface 602 comprises logic encoded in software and/or hardware in a suitable combination and operable to communicate with the network. More specifically, the interface 602 may comprise software supporting one or more communication protocols associated with communications such that the network or interface's hardware is operable to communicate physical signals within and outside of the computer 600.

The computer 600 includes at least one processor 604. Although illustrated as a single processor 604 in FIG. 6, two or more processors may be used according to particular needs, desires, or particular implementations of the computer. Generally, the processor 604 executes instructions and manipulates data to perform the operations of the computer 600. Specifically, the processor 604 executes the functionality disclosed in FIGS. 1-5.

The computer 600 also includes a memory 614 that holds data for the computer 600. Although illustrated as a single memory 614 in FIG. 6, two or more memories may be used according to particular needs, desires, or particular implementations of the computer 600. While memory 614 is illustrated as an integral component of the computer 600, in alternative implementations, memory 614 can be external to the computer 600.

The application 606 is an algorithmic software engine providing functionality according to particular needs, desires, or particular implementations of the computer 600, particularly with respect to functionality required for anomaly detection. Although illustrated as a single application 606, the application 606 may be implemented as multiple applications 606 on the computer 600. In addition, although illustrated as integral to the computer 600, in alternative implementations, the application 606 can be external to the computer 600.

There may be any number of computers 600 associated with, or external to, and communicating over a network. Furthermore, this disclosure contemplates that many users may use one computer 600, or that one user may use multiple computers 600.

Implementations of the subject matter and the functional operations described in this specification can be implemented in digital electronic circuitry, in tangibly embodied computer software or firmware, in computer hardware, including the structures disclosed in this specification and their structural equivalents, or in combinations of one or more of them. Software implementations of the described subject matter can be implemented as one or more computer programs, that is, one or more modules of computer program instructions encoded on a tangible, non-transitory, computer-readable medium for execution by, or to control the operation of, a computer or computer-implemented system. Alternatively, or additionally, the program instructions can be encoded in/on an artificially generated propagated signal, for example, a machine-generated electrical, optical, or electromagnetic signal that is generated to encode information for transmission to a receiver apparatus for execution by a computer or computer-implemented system. The computer-storage medium can be a machine-readable storage device, a machine-readable storage substrate, a random or serial access memory device, or a combination of computer-storage mediums. Configuring one or more computers means that the one or more computers have installed hardware, firmware, or software (or combinations of hardware, firmware, and software) so that when the software is executed by the one or more computers, particular computing operations are performed. The computer storage medium is not, however, a propagated signal.

The terms "data processing apparatus," "computer," "computing device," or "electronic computer device" (or an equivalent term as understood by one of ordinary skill in the art) refer to data processing hardware and encompass all kinds of apparatuses, devices, and machines for processing data, including by way of example, a programmable processor, a computer, or multiple processors or computers. The computer can also be, or further include special-purpose logic circuitry, for example, a central processing unit (CPU), a field-programmable gate array (FPGA), or an application specific integrated circuit (ASIC). In some implementations, the computer or computer-implemented system or special-purpose logic circuitry (or a combination of the computer or computer-implemented system and special-purpose logic circuitry) can be hardware- or software-based (or a combination of both hardware- and software-based). The computer can optionally include code that creates an execution environment for computer programs, for example, code that constitutes processor firmware, a protocol stack, a database management system, an operating system, or a combination of execution environments. The present disclosure contemplates the use of a computer or computer-implemented system with an operating system, for example LINUX, UNIX, WINDOWS, MAC OS, ANDROID, or IOS, or a combination of operating systems.

A computer program, which can also be referred to or described as a program, software, a software application, a unit, a module, a software module, a script, code, or other component can be written in any form of programming language, including compiled or interpreted languages, or declarative or procedural languages, and it can be deployed in any form, including, for example, as a standalone program, module, component, or subroutine, for use in a computing environment. A computer program can, but need not, correspond to a file in a file system. A program can be stored in a portion of a file that holds other programs or data, for example, one or more scripts stored in a markup language document, in a single file dedicated to the program in question, or in multiple coordinated files, for example, files that store one or more modules, sub programs, or portions of code. A computer program can be deployed to be executed on one computer or on multiple computers that are located at one site or distributed across multiple sites and interconnected by a communication network.

While portions of the programs illustrated in the various figures can be illustrated as individual components, such as units or modules, that implement described features and functionality using various objects, methods, or other processes, the programs can instead include a number of sub-units, sub-modules, third-party services, components, libraries, and other components, as appropriate. Conversely, the features and functionality of various components can be combined into single components, as appropriate. Thresholds used to make computational determinations can be statically, dynamically, or both statically and dynamically determined.

Described methods, processes, or logic flows represent one or more examples of functionality consistent with the present disclosure and are not intended to limit the disclosure to the described or illustrated implementations, but to be accorded the widest scope consistent with described principles and features. The described methods, processes, or logic flows can be performed by one or more programmable computers executing one or more computer programs to perform functions by operating on input data and generating output data. The methods, processes, or logic flows can also be performed by, and computers can also be implemented as, special-purpose logic circuitry, for example, a CPU, an FPGA, or an ASIC.

Computers for the execution of a computer program can be based on general or special-purpose microprocessors, both, or another type of CPU. Generally, a CPU will receive instructions and data from and write to a memory. The essential elements of a computer are a CPU, for performing or executing instructions, and one or more memory devices for storing instructions and data. Generally, a computer will also include, or be operatively coupled to, receive data from or transfer data to, or both, one or more mass storage devices for storing data, for example, magnetic, magneto optical disks, or optical disks. However, a computer need not have such devices. Moreover, a computer can be embedded in another device, for example, a mobile telephone, a personal digital assistant (PDA), a mobile audio or video player, a game console, a global positioning system (GPS) receiver, or a portable memory storage device, for example, a universal serial bus (USB) flash drive, to name just a few.

Non-transitory computer readable media for storing computer program instructions and data can include all forms of permanent/non-permanent or volatile/non volatile memory, media and memory devices, including by way of example semiconductor memory devices, for example, random access memory (RAM), read only memory (ROM), phase change memory (PRAM), static random access memory (SRAM), dynamic random access memory (DRAM), erasable programmable read-only memory (EPROM), electrically erasable programmable read-only memory (EEPROM), and flash memory devices; magnetic devices, for example, tape, cartridges, cassettes, internal/removable disks; magneto optical disks; and optical memory devices, for example, digital versatile/video disc (DVD), compact disc (CD) ROM, DVD+/-R, DVD-RAM, DVD-ROM, high-definition/density (HD)-DVD, and BLU-RAY/BLU-RAY DISC (BD), and other optical memory technologies. The memory can store various objects or data, including caches, classes, frameworks, applications, modules, backup data, jobs, web pages, web page templates, data structures, database tables, repositories storing dynamic information, or other appropriate information including any parameters, variables, algorithms, instructions, rules, constraints, or references. Additionally, the memory can include other appropriate data, such as logs, policies, security or access data, or reporting files. The processor and the memory can be supplemented by, or incorporated in, special-purpose logic circuitry.

To provide for interaction with a user, implementations of the subject matter described in this specification can be implemented on a computer having a display device, for example, a cathode ray tube (CRT), liquid crystal display (LCD), light emitting diode (LED), or plasma monitor, for displaying information to the user and a keyboard and a pointing device, for example, a mouse, trackball, or trackpad by which the user can provide input to the computer. Input can also be provided to the computer using a touchscreen, such as a tablet computer surface with pressure sensitivity or a multi-touch screen using capacitive or electric sensing. Other types of devices can be used to interact with the user. For example, feedback provided to the user can be any form of sensory feedback (such as, visual, auditory, tactile, or a combination of feedback types). Input from the user can be received in any form, including acoustic, speech, or tactile input. In addition, a computer can interact with the user by sending documents to and receiving documents from a client computing device that is used by the user (for example, by sending web pages to a web browser on a user's mobile computing device in response to requests received from the web browser).

The term "graphical user interface (GUI) can be used in the singular or the plural to describe one or more graphical user interfaces and each of the displays of a particular graphical user interface. Therefore, a GUI can represent any graphical user interface, including but not limited to, a web browser, a touch screen, or a command line interface (CLI) that processes information and efficiently presents the information results to the user. In general, a GUI can include a number of user interface (UI) elements, some or all associated with a web browser, such as interactive fields, pull-down lists, and buttons. These and other UI elements can be related to or represent the functions of the web browser.

Implementations of the subject matter described in this specification can be implemented in a computing system that includes a back end component, for example, as a data server, or that includes a middleware component, for example, an application server, or that includes a front-end component, for example, a client computer having a graphical user interface or a Web browser through which a user can interact with an implementation of the subject matter described in this specification, or any combination of one or more such back end, middleware, or front end components. The components of the system can be interconnected by any form or medium of wireline or wireless digital data communication (or a combination of data communication), for example, a communication network. Examples of communication networks include a local area network (LAN), a radio access network (RAN), a metropolitan area network (MAN), a wide area network (WAN), Worldwide Interoperability for Microwave Access (WIMAX), a wireless local area network (WLAN) using, for example, 802.11x or other protocols, all or a portion of the Internet, another communication network, or a combination of communication networks. The communication network can communicate with, for example, Internet Protocol (IP) packets, frame relay frames, Asynchronous Transfer Mode (ATM) cells, voice, video, data, or other information between network nodes.

The computing system can include clients and servers. A client and server are generally remote from each other and typically interact through a communication network. The relationship of client and server arises by virtue of computer programs running on the respective computers and having a client-server relationship to each other.

In some implementations, any or all of the components of the computing system, both hardware and/or software, may interface with each other and/or the interface using an API and/or a service layer. The API may include specifications for routines, data structures, and object classes. The API may be either computer language independent or dependent and refer to a complete interface, a single function, or even a set of APIs. The service layer provides software services to the computing system. The functionality of the various components of the computing system may be accessible for all service consumers via this service layer. Software services provide reusable, defined business functionalities through a defined interface. For example, the interface may be software written in JAVA, C++, or other suitable language providing data in XML format or other suitable formats. The API and/or service layer may be an integral and/or a stand-alone component in relation to other components of the computing system. Moreover, any or all parts of the service layer may be implemented as child or sub-modules of another software module, enterprise application, or hardware module without departing from the scope of this disclosure.

While this specification contains many specific implementation details, these should not be construed as limitations on the scope of any inventive concept or on the scope of what can be claimed, but rather as descriptions of features that can be specific to particular implementations of particular inventive concepts. Certain features that are described in this specification in the context of separate implementations can also be implemented, in combination, in a single implementation. Conversely, various features that are described in the context of a single implementation can also be implemented in multiple implementations, separately, or in any sub-combination. Moreover, although previously described features can be described as acting in certain combinations and even initially claimed as such, one or more features from a claimed combination can, in some cases, be excised from the combination, and the claimed combination can be directed to a sub-combination or variation of a sub-combination.

Particular implementations of the subject matter have been described. Other implementations, alterations, and permutations of the described implementations are within the scope of the following claims as will be apparent to those skilled in the art. While operations are depicted in the drawings or claims in a particular order, this should not be understood as requiring that such operations be performed in the particular order shown or in sequential order, or that all illustrated operations be performed (some operations can be considered optional), to achieve desirable results. In certain circumstances, multitasking or parallel processing (or a combination of multitasking and parallel processing) can be advantageous and performed as deemed appropriate.

The separation or integration of various system modules and components in the previously described implementations should not be understood as requiring such separation or integration in all implementations, and it should be understood that the described program components and systems can generally be integrated together in a single software product or packaged into multiple software products.

Described implementations of the subject matter can include one or more features, alone or in combination.

For example, in an implementation, it is proposed a first feature that deals with a method for determining a subset of files from a set of files, wherein the method comprises:
obtaining a set of vectors associated with the set of files;
obtaining at least one value per vector from the set of vectors by performing a dot product between a vector from the set of vectors and a common projection vector;
clustering the files or the vectors into clusters of files or vectors based on the at least one value per vector;
determining a subset of files by selecting files depending on the clusters of files or vectors.

A second feature, combinable with any of the previous or following features, relates to a method for determining a subset of files from a set of files, wherein the common projection vector comprises components with values equal to either -1 or +1, or components with values equal to either -1 ± Noise_1 or +1 ± Noise _2, wherein Noise_1 and Noise_2 are random real values smaller than 1.

A third feature, combinable with any of the previous or following features, relates to a method for determining a subset of files from a set of files, wherein the vector from the set of vectors is an output of a one hot encoding of a file from the set of files.

A fourth feature, combinable with any of the previous or following features, relates to a method for determining a subset of files from a set of files, wherein the vector from the set of vectors is an output of a Trend Micro Locality Sensitive Hashing, TLSH hashing, of a file from the set of files.

A fifth feature, combinable with any of the previous or following features, relates to a method for determining a subset of files from a set of files, wherein the random real values are close to zero.

A sixth feature, combinable with any of the previous or following features, relates to a method for determining a subset of files from a set of files, wherein a number of components of the common projection vector with values equal to -1 is close to a number of components of the common projection vector with values equal +1.

A seventh feature, combinable with any of the previous or following features, relates to a method for determining a subset of files from a set of files, wherein two or more values per vector are obtained, the two or more values resulting from a use of different common projection vectors.

An eighth feature, combinable with any of the previous or following features, relates to a method for determining a subset of files from a set of files, wherein up to N values per vector are obtained, N being an integer equal to 10.

A ninth feature, combinable with any of the previous or following features, relates to a method for determining a subset of files from a set of files, wherein clustering the files or vectors into clusters of files or vectors comprises determining a proximity between a first file or vector, associated with at least one first obtained value, and a second file or vector associated with at least one second obtained value, from a distance measure between the at least one first obtained value and the at least one second obtained value.

A tenth feature, combinable with any of the previous or following features, relates to a method for determining a subset of files from a set of files, wherein clustering the files into clusters of files or vectors comprises multiplying the at least one obtained value with a multiplier value, rounding an output of the multiplying to a nearest integer value, and grouping files with a same rounded integer value.

An eleventh feature, combinable with any of the previous or following features, relates to a method for determining a subset of files from a set of files, wherein the multiplier value is selected based on an expected number of files to be selected.

A twelfth feature, combinable with any of the previous or following features, relates to a method for determining a subset of files from a set of files, wherein determining a subset of files further comprises, for a given cluster, determining a distance measure between the at least one value per vector and a mean value, the mean value being a mean of all the at least one value of files or vectors belonging to the given cluster, and selecting a subset of files based on the determined distance measure.

A thirteenth feature, combinable with any of the previous or following features, relates to a method for determining a subset of files from a set of files, wherein determining a subset of files further comprises, for a given cluster, selecting randomly one or more files from this given cluster.

A fourteenth feature, combinable with any of the previous or following features, relates to a method for determining a subset of files from a set of files, wherein a number of selected files per cluster is a function of a size of a corresponding cluster.

A fifteenth feature, combinable with any of the previous features, relates to a method for determining a subset of files from a set of files, wherein the set of files comprises between 100 000 and 10 000 000 000 files.

The previously described example implementations do not define or constrain the present disclosure. Other changes, substitutions, and alterations are also possible without departing from the scope of the present disclosure.

In a variant, features previously mentioned can be implemented either in hardware or as a computer program.

Furthermore, any claimed implementation is considered to be applicable to at least a computer-implemented method; a non-transitory, computer-readable medium storing computer-readable instructions to perform the computer-implemented method; and a computer system comprising a computer memory interoperably coupled with a hardware processor configured to perform the computer-implemented method or the instructions stored on the non-transitory, computer-readable medium.

At last, according to an embodiment, some machine learning models can be run on Central Processing Unit (CPU) that are general-purpose processors that handle most types of computing tasks. In a variant, Graphics Processing Unit (GPU) which are specialized hardware designed for parallel computing can be used to run or train machine learning models mentioned in this document. Moreover, in a variant, Tensor Processing Unit (TPU) can be used. Therefore a device that comprises at least one of these different processors can execute part of the processes that involve the use of machine learning models.

## Claims

1. A computer-implemented method for determining a subset of files from a set of files, wherein the method comprises:
obtaining a set of vectors associated with the set of files;
obtaining at least one value per vector from the set of vectors by performing a dot product between a vector from the set of vectors and a common projection vector;
clustering the files or the vectors into clusters of files or vectors based on the at least one value per vector;
determining a subset of files by selecting files depending on the clusters of files or vectors.

2. The computer-implemented method of claim 1, wherein the common projection vector comprises components with values equal to either -1 or +1, or components with values equal to either -1 ± Noise_1 or +1 ± Noise_2, wherein Noise_1 and Noise_2 are random real values smaller than 1.

3. The computer-implemented method of claim 1 or 2, wherein the vector from the set of vectors is an output of a one hot encoding of a file from the set of files.

4. The computer-implemented method of claim 1 or 2, wherein the vector from the set of vectors is an output of a Trend Micro Locality Sensitive Hashing, TLSH hashing, of a file from the set of files.

5. The computer-implemented method of claim 2, wherein the random real values are close to zero.

6. The computer-implemented method of claim 2, wherein a number of components of the common projection vector with values equal to -1 is close to a number of components of the common projection vector with values equal +1.

7. The computer-implemented method of any preceding claim, wherein two or more values per vector are obtained, the two or more values resulting from a use of different common projection vectors.

8. The computer-implemented method of claim 7, wherein up to N values per vector are obtained, N being an integer equal to 10.

9. The computer-implemented method of any preceding claim, wherein clustering the files or vectors into clusters of files or vectors comprises determining a proximity between a first file or vector, associated with at least one first obtained value, and a second file or vector associated with at least one second obtained value, from a distance measure between the at least one first obtained value and the at least one second obtained value.

10. The computer-implemented method of any one of claims 1 to 8, wherein clustering the files into clusters of files or vectors comprises multiplying the at least one obtained value with a multiplier value, rounding an output of the multiplying to a nearest integer value, and grouping files with a same rounded integer value, optionally wherein the multiplier value is selected based on an expected number of files to be selected.

11. The computer-implemented method of claim 1, wherein determining a subset of files further comprises, for a given cluster, determining a distance measure between the at least one value per vector and a mean value, the mean value being a mean of all the at least one value of files or vectors belonging to the given cluster, and selecting a subset of files based on the determined distance measure, optionally wherein determining a subset of files further comprises, for a given cluster, selecting randomly one or more files from this given cluster.

12. The computer-implemented method of claim 1, wherein a number of selected files per cluster is a function of a size of a corresponding cluster.

13. The computer-implemented method of claim 1, wherein the set of files comprises between 100 000 and 10 000 000 000 files.

14. A computer program which, when executed on at least one processor of an electronic device, causes the electronic device to perform the method of any preceding claim.

15. A computer-implemented system, comprising:
one or more computers; and
one or more computer memory devices interoperably coupled with the one or more computers and having tangible, non-transitory, machine-readable media storing one or more instructions that, when executed by the one or more computers, perform the method of any one of claims 1 to 13.
